# EUROPEAN PATENT APPLICATION

(11) **EP 2 353 826 A1**
(43) Date of publication of application: **10.08.2011**
(21) Application number: 10000880.4
(22) Date of filing: 28.01.2010
(51) Int. Cl.: B29B 13/00, B29B 7/84, B29C 70/48

(54) **Method and arrangement to improve the production of a blade**

(71) Applicant: SIEMENS AKTIENGESELLSCHAFT, 80333 München (DE)
(72) Inventor: Schibsbye, Karsten, 7000 Fredericia (DK)

(57) **Abstract**

The invention relates to a method and to an arrangement to improve the production of a blade, preferably to improve the production of a wind turbine blade.

A first container (1) contains a resin. The first container (1) is connected with a degas-system (5), thus the resin is provided to the degas-system (3). The degas-system (3) is constructed and designed in a way that the amount of gas within the provided resin is reduced.

Thus gas-reduced resin is produced , which is mixable with a hardener. The resin-hardener-mixture is applicable for an injection into an enclosed composite structure (8), which is used to produce the blade (8).

## Description

The invention relates to a method and to an arrangement to improve the production of a blade, preferably to improve the production of a wind turbine blade.

The three-dimensional shape of a blade is built up by a number of layers for example. The layers are stacked preferably, supported by a base.

The layers may contain sheets of glass-fibres, balsa wood, air-pockets, etc. The blade is built up like a sandwich as a composite structure.

It is known to use a first mould, which supports the three-dimensional blade structure. A second mould is connected with the first mould, thus a resulting mould-system encloses the blade. Air is evacuated out of the mould system, while a combination of resin and a hardener is injected into the mould system. The resin and the hardener penetrate the composite structure of the blade. The resin cures out next, thus a main work is already done during the process to manufacture the blade.

The resin and the hardener may be provided in large containers (such as so called "batch container" or "intermediate bulk container, IBC") if large quantities are needed. These containers are used especially, if a large wind turbine blade is produced. This kind of blade shows a typical length of 50 meters or even more.

The resin/hardener-mixture contains a large quantity of microscopic gas bubbles, while the gas may be absorbed from the air for example.

If the mixture is injected e.g. by a so called "Vacuum Assisted Resin Transfer, VART" into the mould-system the gas bubbles accumulates into the composite structure, too. Experiences have shown that the gas bubbles accumulate especially at locations where the composite is most porous. For example the bubbles accumulate in the glass fibre material at locations, where the denseness of the fibres is lowest.

Furthermore bubbles may accumulate near an inlet, where the resin/hardener-mixture is injected into the mould-system.

This leads to an extensive number of small voids in the casted blade structure, which weakens the structure of the blade.

Additionally the surface of the blade will become even porous and sensible to environmental impacts if the bubbles accumulate near the surface of the blade. Thus the life time of the blade is decreased.

The completed blade is object of a test-procedure, which is done by help of non-destructive testing-methods. The voids also influence this test negatively.

There are a number of attempts to degas the mixture of resin and hardener, but the resulting process is often time-extensive and thus expensive.

Additionally the mixture starts to harden during the degassing process and thus it is very difficult to ensure an optimized "mixing-and-injection" process.

It is therefore the aim of the invention to provide an improved method and arrangement to produce a blade, while gas bubbles inside the injected mixture are reduced or even avoided.

This aim is reached by the features of claims 1 and 8.

Preferred configurations are object of the dependent claims.

According to the invention resin is degassed before it is mixed with a hardener for an injection intended during a blade-production-process.

To do the blade-production-process the resin is mixed with a hardener by a machine for example.

The resin is applied from a first container, while the hardener is applied from a second container for example.

Before the mixture is done, the resin is applied to a degas-system. This degas-system is constructed and designed in a way that the amount of gas within the provided resin is reduced. The gas-reduced resin is provided to the machine to generate the needed resin-hardener-mixture.

The mixture is applied to an enclosed composite structure of the blade for example. The mixture of resin and hardener is injected into the composite structure to manufacture the blade.

The degassing of the resin may be achieved by an applied vacuum or by an applied pressure-difference as described later. They are applied in periodic time-intervals for example.

It is also possible to apply vibrations to the resin for its degassing.

Or an additive is added to the resin, which is used to reduce or even remove the gas out of the resin.

It is also possible to use a permeable material (like the well known "Gore-Tex ®" material, etc.) as filter-material. For example gas bubbles within the resin are allowed to pass through this filter while the degassed resin is mixed with the hardener later during the blade-production process.

In a preferred configuration an active carbon filter is used to filter the gas removed form the resin. Thus the gas is cleaned before it is brought to the ambient air.

Various test have shown, that the amount of gas (bubbles) in the resin is bigger than the amount of gas (bubbles) in the hardener. Thus the invention uses this knowledge advantageously.

The reduction of the gas bubbles in the resin is sufficient to avoid the problems stated in the introduction part of this application.

For usually used mixtures of resin and hardener the amount of resin within the mixture is higher than the amount of hardener.

These mixtures may contain a "resin/hardener"-ratio of 3:1 for epoxy or of 100:1 for Polyester or Vinylester for example.

Thus the degassing of the resin according of the invention results in a drastically decrease of the gas-bubbles within the mixture.

This in turn decreases the amount of voids in the casted blade-structure, hereby all outlined problems are minimized or even reduced.

Only a small amount of fluid - the resin itself - needs to be degassed, thus the inventive arrangement can be applied very easy to production lines.

The degassing of the resin is quite fast as only the amount of resin needs to be processed.

According to the invention the degassing is done before the resin is mixed with the hardener. Thus time is saved. The mixture is applied to the blade structure immediately and without any further delays, thus a hardening of the mixture within the feeding-system is avoided. It is ensured, that the mixture is injected into the closed mould-system with a desired viscosity.

There is no need to perform a degassing during the injection process, thus production time is saved.

The blade-structure shows a reduced amount of voids. Thus additional work to repair the surface is reduced. The structural strength of the blade is increased.

The test results of the non-destructive-testing-procedure, applied to the blade, are improved.

The invention is described by help of some figures. The figures show preferred configurations and do not limit the scope of the invention.
- FIG 1: shows a preferred first configuration of the invention,
- FIG 2: shows a preferred second configuration of the invention,
- FIG 3: shows a preferred third configuration of the invention, and
- FIG 4: shows a preferred fourth configuration of the invention.

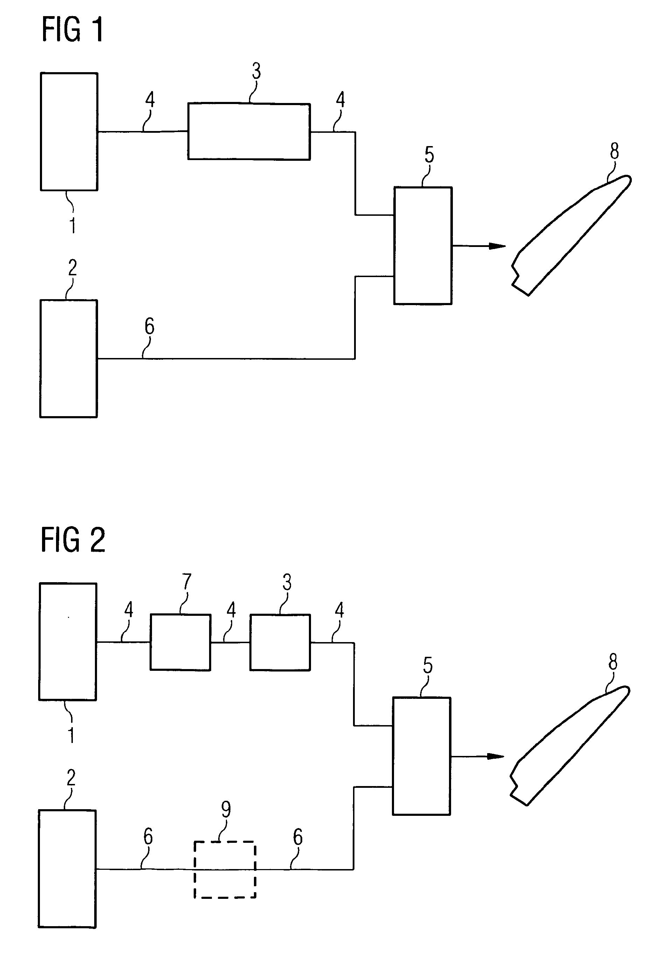

FIG 1 shows a preferred first configuration of the invention.

The arrangement contains a first container 1 and a second container 2. The first container 1 comprises the resin, while the second container 2 comprises the hardener.

The resin container 1 is connected with a degas-system 3 by help of a resin-hose 4. Thus resin is provided from the first container 1 to the degas-system 3.

The degas-system 3 is constructed and designed in a way, that the provided resin is degassed.

For this purpose the degas-system 3 may contain an arrangement, which applies a pressure-variation or a technical vacuum to the resin, which contains the gas bubbles.

Due to the pressure-variation the enclosed (more smaller) gas bubbles will band with adjacent gas bubbles, thus bigger-sized bubbles are built. These bubbles ascend to the resin-surface and can be extracted very easily.

The degas-system 3 is connected with a machine 5 via another resin-hoe, thus degassed resin is provided to the machine 5.

The second container 2 is also connected with this machine 5 by a hardener hose 6, thus hardener is provided to the machine 5.

The machine 5 is constructed and designed in a way, that the resin is mixed with the hardener in a predetermined ratio. Next the mixture is provided to the enclosed composite structure 8 of the blade.

FIG 2 shows a preferred second configuration of the invention, with reference to FIG 1.

One or more heaters 7 are located between the first container 1 and the degas-system 3. The heater 7 is connected with them by a resin hose 4.

The heater 7 is constructed and designed in a way that the resin is warmed before it is applied to the degas-system 3. The heater 7 changes the viscosity of the resin, which is an advantage for the applied degas process of the resin.

Preferably the temperature of the heated resin is approximately 35°C.

Preferably one or more heaters 9 are located between the second container 2 and the mixing-machine 5. The heater 9 is connected with them by a hardener-hose 6.

The heater 9 is constructed and designed in a way that the hardener is warmed before it is applied to the machine 5.

The heater 9 changes the viscosity of the hardener, which is an advantage for mixture of the resin and the hardener within the machine 5.

Preferably the temperature of the heated hardener is approximately 35°C.

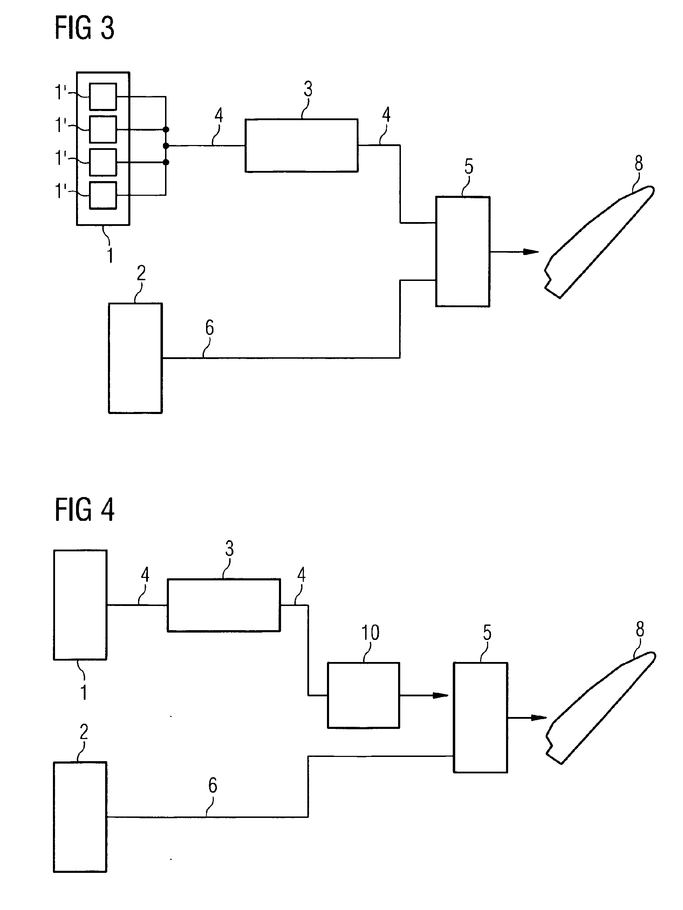

FIG 3 shows a preferred third configuration of the invention, with reference to FIG 1.

The first container 1 contains a number of sub-containers 1', which are connected. This allows the change of one of the sub-containers 1, as soon it is emptied.

This arrangement is preferably used for large wind-turbine-blades.

Even the second container 2 may contain a number of sub-containers for the hardener - not shown here in detail.

Referring to one of the figures FIG 1 up to FIG 3 the level of gas-bubbles within the resin and/or the hardener and/or the mixture is measured by a dedicated measurement-equipment. This allows the control of the flow through the degas-system 3 in dependency of the measured level(s). Thus a closed-loop configuration is be realised for an optimized production-procedure.

FIG 4 shows a preferred configuration of the invention, with reference to FIG 1.

Experiments have shown that after the degassing the resin can stay in a container 10, used as a reservoir, for a certain time period. It is possible to keep the degassed resin at stock for a week or even longer.

Therefore it is possible to degas the resin in due time before the blade-production process.

This allows the transportation of the degassed resin to another and remote location, where the blade production is intended to be done.

## Claims

1. Arrangement to improve the production of a blade,
- where a first container (1) contains a resin,
- where the first container (1) is connected with a degas-system (3), thus resin is provided from the first container (1) to the degas-system (3),
- where the degas-system (3) is constructed and designed in a way, that the amount of gas within the provided resin is reduced,
- while the gas-reduced resin is mixable with a hardener, thus the resin-hardener-mixture is applicable for an injection into an enclosed composite structure (8), which is used to produce the blade (8).

2. Arrangement according to claim 1,
- with a second container (2), which contains a hardener,
- with a machine (5), which is connected with the degas-system (3), thus the gas-reduced resin is provided to the machine (5),
- where the machine (5) is constructed and designed in a way, that a mixture of gas-reduced resin and of hardener, applied from the second container (2), is originated by the machine (5),
- where the machine (5) is connected with an enclosed composite structure (8) of the blade, thus the mixture of gas-reduced resin and hardener is injected into the composite structure (8).

3. Arrangement according to claim 1 or 2,
- where the degas-system (3) contains means to apply a pressure-variation or a technical vacuum to the resin, and/or
- where the degas-system (3) contains means to apply vibrations to the resin, and/or
- where the degas-system (3) contains means to apply an additive to the resin, and/or
- where the degas-system (3) contains a permeable filter-material, which is constructed in a way, that gas within the resin is allowed to pass through the filter, to reduce the amount of gas within the resin.

4. Arrangement according to claim 3, where the degas-system (3) contains or is connected with an active carbon filter to clean the gas before it is brought to the ambient air.

5. Arrangement according to one of the claims 1 to 4, where at least one heater (7) is located between the first container (1) and the degas-system (3), thus the resin is warmed up before it is applied to the degas-system (3).

6. Arrangement according to one of the claims 2 to 5, where at least one heater (9) is located between the second container (2) and the machine (5), thus the hardener is warmed up before it is applied to the machine (5).

7. Arrangement according to one of the claims 1 to 6, where the first container (1) and/or the second container (2) contains a number of sub-containers, which are connected to each other.

8. Arrangement according to one of the claims 1 to 7, where a measurement-equipment is constructed and arranged in a way that the level of gas within the resin and/or within the hardener and/or within the mixture is measured, while the flow through the degas-system (3) is controlled in dependency of the measured level.

9. Method to manufacture a blade,
- where the amount of gas within a resin is reduced before the resin is used for a blade-production- process.

10. Method to manufacture a blade, where the gas-reduced resin is mixed with a hardener for an injection into an enclosed composite structure to manufacture the blade.

11. Method according to claim 9 or claim 10,
- where a pressure-variation or a technical vacuum is applied to the resin, and/or
- where vibrations are applied to the resin, and/or
- where an additive is applied to the resin, and/or
- where the resin is filtered by a permeable filter-material, which is constructed in a way, that gas within the resin is allowed to pass through the filter, to reduce the amount of gas within the resin.

12. Method according to one of the claims 9 to 11, where the resin is warmed up before the amount of gas within the resin is reduced.

13. Method according to one of the claims 9 to 12, where the hardener is warmed up before it is mixed with the gas-reduced resin.

14. Method according to one of the claims 9 to 13, where the level of gas within the resin and/or within the hardener and/or within the mixture is measured and where the gasreduction is controlled in dependency of the measured level.
